# EUROPÄISCHE PATENTSCHRIFT

(11) **EP 1 763 845 B1**
(45) Veröffentlichungstag und Bekanntmachung des Hinweises auf die Patenterteilung: **09.10.2013**
(21) Anmeldenummer: 06723119.1
(22) Anmeldetag: 25.02.2006
(51) Int. Cl.: G06T 7/00, G06T 15/20, G06T 19/00, G02B 27/01

(54) **VERFAHREN UND VORRICHTUNG ZUR BESTIMMUNG VON OPTISCHEN ÜBERDECKUNGEN MIT AR-OBJEKTEN**
METHOD AND DEVICE FOR DETERMINING OPTICAL OVERLAPS WITH AR OBJECTS
PROCEDE ET DISPOSITIF POUR DETERMINER DES SUPERPOSITIONS OPTIQUES D'OBJETS VIRTUELS

(30) Priorität: 02.03.2005 DE 102005009437
(43) Veröffentlichungstag der Anmeldung: 21.03.2007
(73) Patentinhaber: KUKA Laboratories GmbH, 86165 Augsburg (DE)
(72) Erfinder: BISCHOFF, Rainer, 86163 Augsburg (DE); KAZI, Arif, 73430 Aalen (DE)
(74) Vertreter: Patentanwälte Funk & Böss GbR
(86) Internationale Anmeldenummer: PCT/EP2006/001753
(87) Internationale Veröffentlichungsnummer: WO 2006/092251

(56) Entgegenhaltungen:
- EP-A1- 1 435 737
- WO-A-00/52536
- DE-A1- 10 128 015
- DE-A1- 10 305 384
- US-A1- 2002 082 498
- US-A1- 2003 012 410
- US-B1- 6 503 195
- KIYOKAWA K ET AL: "An optical see-through display for mutual occlusion with a real-time stereovision system", COMPUTERS AND GRAPHICS, ELSEVIER, GB, vol. 25, no. 5, 1 October 2001 (2001-10-01), pages 765-779, XP004318022, ISSN: 0097-8493

## Beschreibung

Die Erfindung betrifft ein Verfahren und eine Vorrichtung zur Bestimmung von optischen Überdeckungen eines virtuellen Bildes eines virtuellen Objektes (AR-Objekts) und eines Realbildes einer realen Umgebung einer realen Umgebung, insbesondere zum Einblenden von AR-Objekten in ein eine Umgebung zeigendes Umgebungsbild.

Der Erfindung liegt damit auf dem Gebiet der sogenannten Augmented Reality (AR), in Deutsch erweiterte oder augmentierte Realität als visuelle Überlagerung (= Erweiterung) der Realität mit virtueller Information. Ein AR-Objekt oder ein Augmented-Reality-Objekt ist ein Objekt, für das in einem Rechner, primär zunächst in einem Speicher, Rauminformationen vorliegen und das nach Herstellen des Bildes aus diesen Rauminformationen durch Rendern in einem Umgebungsbild der Umgebung eingeblendet bzw. dieser überlagert wird. Die Entstehung des AR-Objekts, d.h. die Herkunft der dieses definierenden Rauminformation, ist nicht wesentlich; es kann rein mathematisch erzeugt oder modelliert sein; es kann sich auch um von einem tatsächlichen realen Objekt gewonnene Rauminformation handeln.

In der Augmented Reality kann die Realität oder Umgebung entweder als Videobild oder durch einen transparenten Bildschirm betrachtet werden, in die jeweils die Einblendung des AR-Objekts erfolgt. Im ersten Falle spricht man von "Video See-Trough" (VST), im zweiten Falle von "Optical See-Trough" (OST). Daneben gibt es weitere Varianten der Visualisierung, die sich nicht wesentlich von diesen beiden Arten unterscheiden.

Augmented Reality kann in vielfältiger Weise eingesetzt und benutzt werden. So kann das ein Werkzeug, wie eine Schweißzange, oder ein Werkstück darstellende AR-Objekt in richtiger Zuordnung am Bild einer Maschine oder eines Roboters (hier im Sinne der ISO 8373) eingeblendet werden, um hierdurch beispielsweise den durch den zusätzlichen Gegenstand (Werkstück, Werkzeug) beschränkten Bewegungsraum zu erkennen. Es können Koordinatensysteme zur Veranschaulichung und Verdeutlichung der Zuordnung derselben zueinander und zur Maschine oder dem Roboter eingeblendet werden. Es können auch Textinformationen, wie Auszüge von Bedienungsanleitungen oder dergleichen eingeblendet werden.

Im Folgenden wird unabhängig von der Art der Visualisierung (VST, OST oder andere Arten) von einem Umgebungsbild gesprochen, wenn ein AR-Objekt in diesem Umgebungsbild sichtbar gemacht werden soll. Um ein AR-Objekt so in ein Umgebungsbild einblenden zu können, dass es sich nahtlos, d.h. lage- und verdeckungsrichtig, in das Umgebungsbild einfügt, wird ein möglichst exaktes Modell der Umgebung, auch als Verdeckungsmodell bezeichnet, benötigt. Dieses wird dazu verwendet, die Teile eines AR-Objekts auszublenden, die für einen Betrachter aus einem bestimmten Blickwinkel auf eine Szene nicht sichtbar sind.

Es besteht das Problem, dass Modelle von Roboterzellen nur näherungsweise mit der Wirklichkeit übereinstimmen. Dies liegt darin begründet, dass Roboterzellen nicht genau nach Plan aufgebaut werden können und dass während des Aufbaus und der Inbetriebnahme einer Anlage noch Änderungen erfolgen, die im Modell nicht nachgearbeitet werden. Es gibt bisher keine automatisierten Verfahren, die Modell und Wirklichkeit miteinander abgleichen.

Verdeckungsmodelle können daher die Wirklichkeit nicht in allen Details abbilden. So wird bei Modellen eines (realen) Roboters in der Regel die Kabelführung nicht im Modell wiedergegeben. Auch können Verdeckungsmodelle durch sie gegebene Modelle der Umgebung nicht exakt lagerichtig in Bezug zur realen Welt positionieren. Derartige Kalibrationsfehler (auch Registrierungsfehler genannt) haben zur Folge, dass AR-Objekte fehlerhaft in das Umgebungsbild eingebettet werden. Fehler können dadurch sichtbar werden, dass Teile von AR-Objekten zu sehen sind, obwohl diese verborgen sein müssten, oder dass Teile von AR-Objekten nicht zu sehen, sie eigentlich zu sehen sein müssten.

Aus der DE 101 28 015 A1 ist ein gattungsgemäßes Verfahren und System zum Planen einer veränderten Produktionsumgebung bekannt, im Zuge dessen virtuelle Planungsergebnisse mit Hilfe eines Augmented Reality (AR)-Systems mit der realen Fertigungsumgebung überlagert werden. Dabei ist vorgesehen, Bildpunkte der realen Umgebung durch eine Kamera und eine nachgeschaltete Vermessungseinrichtung zu erfassen und nachfolgend in einer Auswerteeinrichtung mit den virtuellen Daten eines Planungsobjekts, welches in die reale Umgebung implementiert werden soll, zu überlagern. Dieses Verfahren ist prinzipiell mit den vorstehend erläuterten Fehlerquellen behaftet, die in der Schwierigkeit einer Abgleichung zwischen Modell und Wirklichkeit begründet sind.

Die US 2003/0012410 A1 beschreibt ein Verfahren und ein System zum Bestimmen einer Kamerapose, wobei eine Videosequenz von der Kamera erfasst wird, bestimmte Merkmale der realen Umgebung von der Videosequenz extrahiert werden und ein Modell einer ersten Pose aufgrund dieser Merkmale gebildet wird und durch Weiterverfolgung dieses Modells eine zweite Pose bestimmt wird. Vorstehend aufgeführte Probleme im Zusammenhang mit einer detailgetreuen Einbindung von Augmented Reality (AR)-Objekten in die reale Umgebung werden jedoch durch die Lehre dieser Druckschrift nicht gelöst, welche sich lediglich mit der Posenbestimmung und der Benutzung von Merkmalen der realen Umgebung befasst.

Kiyokawa et al.: "An optical see-through display for mutual occlusion with a real-time stereovision system", Computer and Graphics, Elsevier, GB, Bd. 25, Nr. 5, 1. Oktober 2001, Seiten 765-779 beschreibt ein Mixed-Reality-System mit einem Sichtgerät, an welchem mehrere Kameras angebracht sind. Aus den aufgenommen Bilder dieser Kameras wird mittels stereoskopischer Auswertung eine Tiefenkarte der betrachteten Szene erstellt, welche dann eine lagerichtige Überblendung der virtuellen Objekte ermöglicht.

Der Erfindung liegt die Aufgabe zugrunde, unter Vermeidung der vorgenannten Probleme AR-Objekte ohne den Aufwand der Erzeugung von Verdeckungsmodellen in Echtzeit dynamisch lage- und verdeckungsrichtig einem Umgebungsbild zu überlagern.

Erfindungsgemäß wird die genannte Aufgabe mit einem Verfahren der eingangs genannten Art gelöst, welches gekennzeichnet ist durch optisches Erfassen von Bildpunkten des Realbildes aus einer Betrachtungspose, Bestimmen von ersten Tiefenlagen für die Bildpunkte des Realbildes bezogen auf die Betrachtungspose, Erzeugen von Bildpunkten aus einem auf Grundlage der Pose des virtuellen Objekts und der Betrachtungspose erstellten virtuellen Bildes des virtuellen Objekts, Berechnen von zweiten Tiefenlagen für die Bildpunkte des virtuellen Bildes bezogen auf die Betrachtungspose und Vergleichen der ersten Tiefenlagen mit den zweiten Tiefenlagen auf derselben optischen Achse der Betrachtungspose. Eine bevorzugte Ausbildung des Verfahrens zeichnet sich dadurch aus, dass von einem Blickpunkt aus ein Tiefenbild der Umgebung aufgenommen wird, dass die Darstellung eines ins Umgebungsbild zu platzierendes AR-Objekt dahingehend geändert wird, wie es vom Blickpunkt aus an einem vorgesehenen Ort im Umgebungsbild erscheint, dass für die dem Blickpunkt zugewandten Teile des AR-Objekts bestimmt wird, wie diese Teile vom Blickpunkt aus gesehen relativ zu einem zugehörigen Bildpunkt des Tiefenbildes liegen, also die Tiefenlagen der Bildpunkte des Realbildes der Umgebung mit den Tiefenlagen der Bildpunkte des erzeugten AR-Objekts verglichen werden, dass zumindest die Darstellung von Teilen des AR-Objekts in Relation zu ihrer scheinbaren Tiefe oder Tiefenlage im Bild in einer Weise derart verändert wird, dass Bildbereiche des AR-Objekts, die im Vordergrund liegen, optisch anders dargestellt werden als Bildbereiche des AR-Objekts, die im Hintergrund liegen, und dass das so bearbeitete AR-Objekt in das Umgebungsbild eingeblendet wird.

Zur Lösung der genannten Aufgabe sieht die Erfindung weiterhin eine gattungsgemäße Vorrichtung vor, die gekennzeichnet ist durch eine Aufnahmeeinrichtung zum optischen Erfassen von Bildpunkten des Realbildes aus einer Betrachtungspose, einer Bestimmungseinrichtung zum Bestimmen von ersten Tiefenlagen für die Bildpunkte des Realbildes bezogen auf die Betrachtungspose, einer Erzeugungseinrichtung zum Erzeugen von Bildpunkten aus einem auf Grundlage der Pose des virtuellen Objekts und der Betrachtungspose erstellten virtuellen Bildes des virtuellen Objekts, eine Berechnungseinrichtung zum Berechnen von zweiten Tiefenlagen für die Bildpunkte des virtuellen Bildes bezogen auf die Betrachtungspose, und eine Vergleichseinrichtung zum Vergleichen der ersten Tiefenlagen mit den zweiten Tiefenlagen auf derselben optischen Achse der Betrachtungspose, wobei die Vorrichtung bevorzugt ausgebildet ist durch eine Aufnahmeeinrichtung zum Aufnehmen eines Tiefenbildes der Umgebung von einem Blickpunkt aus, eine Darstellungseinrichtung zum Darstellen eines ins Umgebungsbild zu platzierenden AR-Objekts derart, wie es vom Blickpunkt aus an einem vorgesehenen Ort im Umgebungsbild erscheint, eine Bestimmungseinrichtung zum Bestimmen der für den Blickpunkt zugewandten Teile des AR-Objekts derart, wie diese Teile vom Blickpunkt aus gesehen relativ zu einem zugehörigen Bildausschnitt des Tiefenbildes liegen, also zum Vergleichen der Tiefenlagen der Bildpunkte des Realbildes der Umgebung mit den Tiefenlagen der Bildpunkte des erzeugten AR-Objekts, eine zweite Darstellungseinrichtung zum Darstellen der Teile des AR-Objekts, die vom Blickpunkt aus hinter einem jeweils zugehörigen Bildausschnitt des Tiefenbildes liegen, in einer Weise derart verändert wird, dass Bildbereiche des AR-Objekts, die im Vordergrund liegen, optisch anders dargestellt werden als Bildbereiche des AR-Objekts, die im Hintergrund liegen, und einer Einblendeinrichtung zum Einblenden des AR-Objekts in das Umgebungsbild. Die Erfindung wird insbesondere bei und in Verbindung mit Robotern eingesetzt.

Das Erzeugen von Bildpunkten aus einem auf Grundlage der Pose des virtuellen Objekts und der Betrachtungspose erstellten virtuellen Bildes des virtuellen Objekts kann mittels Rendering, also Berechnen bzw. Erzeugen von realen Bildern aus räumlichen virtuellen Computermodellen erfolgen. Eine Änderung der Darstellung eines AR-Objekts unter Berücksichtigung des Blickpunktes eines Betrachters ist dahingehend zu verstehen, dass aus einem gespeicherten virtuellen (3D)-Objekt auf Grundlage des Betrachtungspunktes und der Pose des virtuellen (3D)-Objekts im Raum, ein (2D)-Bild (AR-Objekt) für den aktuellen Betrachtungspunkt berechnet wird. Tiefenlage bezeichnet Abstände der erfassten Bildpunkte vom Blickpunkt aus gerechnet. Tiefenbild der Umgebung die Bildpunkte eines Realbildes, wobei jedem Bildpunkt eine Information über den Abstand des Bildpunktes vom Betrachtungspunkt aus zugeordnet ist. Vordergrunddarstellung ist eine Darstellung, die einer Bezugsdarstellung in ihrer Tiefenlage vorgelagert ist und die Hintergrunddarstellung ist zu definieren als eine Darstellung, die einer Bezugsdarstellung in ihrer Tiefenlage nachgelagert ist.

Kerngedanke der Erfindung ist es, auf eine Modellierung einer realen Umgebung dadurch verzichten zu können, dass mittels eines optischen Systems nicht nur die Bildpunkte einer Ansicht der realen Umgebung, sondern auch die Abstände der erfassten Bildpunkte vom Blickpunkt (Tiefenlagen) erfasst werden, um Tiefeninformationen unmittelbar zusammen mit digitalen Bilddaten sozusagen simultan zu erfassen. Durch Vergleich dieser Tiefenlagen der Bildpunkte des realen Bildes mit den Tiefenlagen eines virtuellen Bildes kann eine Aussage über Überlappungsbereiche getroffen werden. Eine solche Aussage ist durch einfachen Vergleich der Tiefenlagen von Bildpunkten des realen Bildes mit dem einzublendenden virtuellen Bild möglich, ohne dass aufwändige Berechnungen durchgeführt werden müssen. Aus dem Wegfall aufwändiger Berechnungen ergibt sich der Vorteil, dass das erfindungsgemäße Verfahren echtzeitfähig ist.

Bei einem VST-System ist der Blickpunkt der Ort der Kamera, bei einem OST-Sytem das Auge oder die Augen des Betrachters, wobei eine Einrichtung zum Aufnehmen des Tiefenbildes nahe der optischen Achse vom Auge des Betrachters zum in seinem Blickfeld liegenden Umgebungsbereich angeordnet sein soll und gegebenenfalls eine Koordinatentransformation zwischen dem Ort der Aufnahmeeinrichtung zum Aufnehmen des Tiefenbildes und dem Auge des Betrachters vorzunehmen ist.

Das genannte Verfahren läuft vorzugsweise in Echtzeit, also schritthaltend mit den Änderungen in der realen Welt, ab und die Vorrichtung ist zur Echtzeit-Verarbeitung ausgebildet und arbeitet insbesondere im Echtzeitmodus. Durch die Erfindung werden so AR-Objekte dynamisch in ein Umgebungsbild eingeblendet und beim VST-Verfahren insbesondere schritthaltend in ein Videobild lage- und verdeckungsrichtig eingeblendet. Dies wird erfindungsgemäß dadurch erreicht, dass statt der Durchführung eines aufwändigen Modellierungsprozesses die bildweite Tiefeninformation direkt zur lage- und verdeckungsrichtigen Bearbeitung der AR-Objekte herangezogen werden. Die hierzu erforderliche Relation zwischen Koordinatensystem des realen Gegenstandes, dem das AR-Objekt zuzuordnen ist, z.B. einem Roboter-Koordinatensystem, und dem Kamera-Koordinatensystem, kann durch Kalibration in üblicher Weise bestimmt werden. Daraufhin wird die bekannte Pose des AR-Objekts im Raum mittels bekannter Transformationsregelung in das Kamera-Koordinatensystem und dann in die Bildebene transformiert. Hierdurch ist direkt in Bezug auf das gemessene Tiefenbild ermittelbar, welche Teile eines AR-Objektes gemäß vorgegebener Verdeckungsregeln auf welche Art und Weise dargestellt werden sollen.

Zur Aufnahme des Tiefenbildes kommen grundsätzlich unterschiedlichste Verfahren in Frage, z.B. Laufzeitmessungen (Time of Flight - TOF) Laserscannen, aktive Triangulation, Stereovision, Entfernungsbestimmung durch Defokussieren, Strukturbeleuchtung, Moirétechnik, insbesondere aber ein Verfahren, bei dem eine Beleuchtung mit sehr kurzer Zeit einer im Blickfeld des Betrachters liegenden Umgebung durch einen Lichtvorhang erfolgt, beispielsweise nach der US 4 184 748, und das von der Umgebung reflektierte Licht in ebenfalls sehr kurzen Zeitabständen im Nanosekunden-Bereich, beispielsweise durch (elektro-optische) Schattenblenden unterbrochen, zur Erstellung des Tiefenbildes verarbeitet wird. Wesentlich ist, dass das Verfahren sehr schnell arbeitet, also echtzeitfähig ist.

Wenn Ort und Orientierung eines auf einem Bildschirm darzustellenden computergenerierten künstlichen Objekts bekannt ist, so ist es übliche Technik der Grafik- oder Bildverarbeitung, das Objekt als Modell oder Rauminformation in der Weise zu bearbeiten, wie es sich für den Betrachter bei Wiedergabe auf dem Bildschirm darstellen soll, der die ihm zugewandten Punkte eines Objekts, nicht aber die durch das Objekt selbst "verdeckten" Punkte sieht.

Zur Bearbeitung des AR-Objektes in einer vorgegebenen Weise können Bearbeitungsregeln vorgesehen und beispielsweise im Rechner abgelegt sein, wie beispielsweise in bevorzugter Weise dahingehend, dass die Punkte des AR-Objekts, wie beispielsweise einer am Handflansch eines Roboters montierten Schweißzange, die vom Blickpunkt aus hinter einem jeweils zugehörigen Bildpunkt des Tiefenbildes liegen, also beispielsweise hinter Bereichen der Roboter-Hand, aus einem in das Umgebungsbild eingeblendeten AR-Objekt, hier der Schweißzange, ausgeblendet werden. Auch können in der Darstellung sich bestimmte Merkmale eines AR-Objekts in Abhängigkeit seiner Entfernung zu einer Grenze eines physischen Objekts im Umgebungsbild ändern, wie Transparenz oder Farbe des AR-Objekts, Strichstärke, Linienart, Drahtgitter oder Vollflächen-Modell-Darstellung. So können die Punkte des AR-Objekts, wie beispielsweise eines Koordinatensystems, die vom Blickpunkt aus hinter einem jeweils zugehörigen Bildpunkt des Tiefenbildes liegen, wie beispielsweise "im Inneren" von Roboterteilen, im Umgebungsbild als Gitterbild oder gestrichelt oder strichpunktiert dargestellt werden. Dies gilt auch, wenn z.B. Getriebeteile eines Getriebes als AR-Objekt an sich hinter einer Getriebegehäuseabdeckung "liegen", aber dennoch im AR-Bild sichtbar sein sollen.

In alternativer bevorzugter Ausgestaltung kann vorgesehen sein, dass das Umgebungsbild als Videobild wiedergegeben und das AR-Objekt in das Videobild eingeblendet wird (VST) oder aber, dass das Umgebungsbild durch einen transparenten Schirm unmittelbar betrachtbar ist und das AR-Objekt im transparenten Schirm in das durch diesen betrachtbare Umgebungsbild eingeblendet wird (OST).

In entsprechend bevorzugter Ausgestaltung der Vorrichtung ist im Rahmen von VST eine Anzeigeeinrichtung zum Anzeigen des AR-Objekts ein herkömmlicher, ebenfalls das aufgenommene Umgebungsbild anzeigender Bildschirm, oder aber die Anzeigeeinrichtung zum Anzeigen des AR-Objekts ist ein transparenter Bildschirm, der das Umgebungsbild hindurchtreten lässt. Gemäß einer alternativen Ausgestaltung der Erfindung ist ein Retinaldisplay vorgesehen.

Wenn die Aufnahmeeinrichtung zum Aufnehmen eines Tiefenbildes eine Tiefenbildkamera in der oben skizzierten Weise ist, so sieht eine bevorzugte Ausgestaltung vor, dass diese mit einer Videokamera kombiniert ist.

Die Erfindung kann zur Modellierung von virtuellen oder AR-Objekten nach realen Objekten eingesetzt werden. So kann eine Hüllkurve, die über mehrere Stützpunkte verfügt, der Kontur des zu modellierenden - realen - Objekts angepasst werden. Auch können Parameter von existierenden Modellen so angepasst werden, dass sie mit der Realität besser übereinstimmen. Ein interaktiv bestimmtes, vereinfachtes Modell eines komplexen Werkzeugs oder einer gesamten Zelle kann anschließend beispielsweise zur Kollisionsvermeidungsrechnung verwenden werden. Gerade in der Interaktion des Menschen mit virtuellen Objekten in der realen Welt werden die Vorteile des Erfindungsgegenstandes bei der Visualisierung offensichtlich.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind.

Dabei zeigt:
- Fig. 1: eine schematische Darstellung zur Situation für AR-Visualisierung mit einer stationären Kamera, die sowohl ein Tiefenbild als auch ein normales Videobild für eine VST-Visualisierung liefert;
- Fig. 2a: Darstellung einer Situation für die AR-Visualisierung mit einer mit einem Roboter mitbewegten Tiefenbild-Kamera;
- Fig. 2b: eine schematische Darstellung der Situation einer AR-Visualisierung mit Hilfe einer vom Benutzer mitbewegten Tiefenbildkamera für die VST-AR-Visualisierung;
- Fig. 3: eine schematische Darstellung des Funktionsprinzips der Erfindung für ein VST-AR-System;
- Fig. 4a-d: eine schematische Veranschaulichung der Bearbeitung eines virtuellen Objekts zur lage- und verdeckungsrichtigen Einblendung als AR-Objekt im Bereich des Umgebungsbildes eines realen Körpers;
- Fig. 5a-c: die Veranschaulichung der Einblendung eines Koordinatensystems als AR-Objekt in ein Umgebungsbild unter Berücksichtigung von Blickpunkt und real vorhandenen, teilweise die Sicht auf das AR-Objekt versperrenden Objekten unter verschiedenen Blickwinkeln;
- Fig. 6: der Ablauf des erfindungsgemäßen Verfahrens bei einer VST-Visualisierung;
- Fig. 7: eine schematische Darstellung der OST-AR-Visualisierung mit Hilfe einer 3D-Kamera, die in eine AR-Brille integriert ist und sich bei Kopfbewegungen des Benutzers mitbewegt;
- Fig. 8: eine schematische Darstellung des Erfindungsgegenstandes für ein OST-AR-System;
- Fig. 9: ein Ablaufdiagramm des erfindungsgemäßen Verfahrens bei einer OST-Visualisierung;
- Fig. 10a-g: eine Darstellung zur interaktiven Modellierung eines Robotergreifers in der augmentierten Welt;
- Fig. 11: eine beispielhafte Vorrichtung zur Video-See-Through-(VST-)Visualisierung mit 3D-Kamera, die sowohl ein Tiefenbild als auch das Bild der Umgebung aufnimmt; und
- Fig. 12: eine beispielhafte Vorrichtung zur Optical-See-Through-(OST-)Visualisierung mit 3D-Kamera, von der nur das Tiefenbild ausgewertet wird.

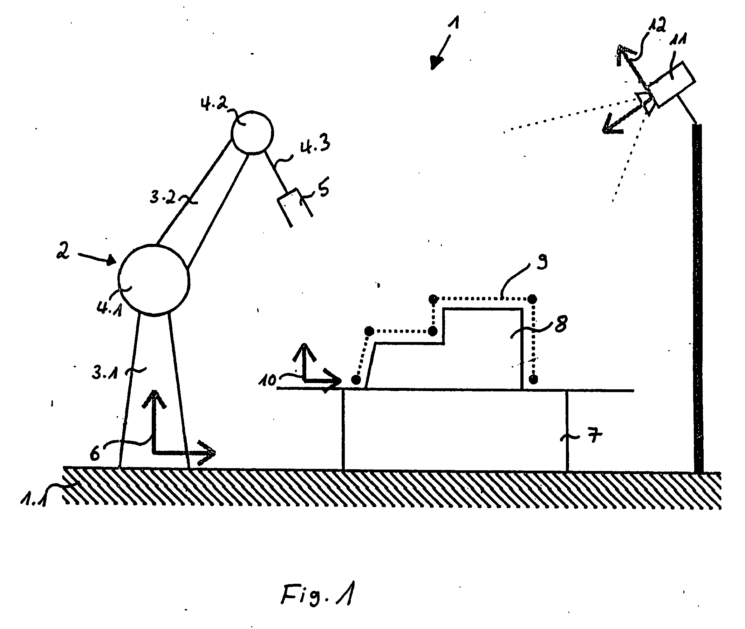

Die Fig. 1 zeigt in schematischer Darstellung die typische Situation in einer Roboter-Bearbeitungs-Zelle 1. Es ist schematisch ein Gelenkroboter gemäß EN ISO 8373 mit Gliedern 3.1, 3.2 und Gelenken 4.1, 4.2 dargestellt. Das Gelenk 4.2 ist ein aus drei einzelnen Drehgelenken bestehendes Rotoidgelenk, an dem sich eine mechanische Schnittstelle 4.3 und eine Endeffektor-Anschlussvorrichtung (Anschlussflansch des Roboters 2 für einen Endeffektor, wie einen Greifer 5) befindet. Weiterhin ist am Fuß des Roboters 2 dessen Weltkoordinatensystem oder Roboterkoordinatensystem 6 dargestellt. Die Fig. 1 zeigt weiterhin ein auf einem Werkstücktisch 7 angeordnetes Werkstück 8 und eine um dieses führende Roboterbahn 9 mit Stützpunkten und mit einer schematischen Darstellung des dieser zugehörigen programmierten Basis- oder Bezugskoordinatensystems 10.

Schließlich ist eine die aus Roboter 2 auf einer Basismontagefläche 1.1 und Werkstück 8 gebildete Szene oder Umgebung aufnehmende stationäre Kamera 11, vorzugsweise eine 3D-Kamera, mit ihrem Kamerakoordinatensystem 12 dargestellt.

Die Kamera nimmt sowohl ein herkömmliches visuelles Videobild als auch ein Tiefenbild der dargestellten Umgebung 1 auf, wobei aus der Bestimmung der räumlichen Beziehung zwischen Roboter- und Kamerakoordinatensystem die Transformation als Voraussetzung für die AR-Visualisierung eines AR-Objekts im von der Kamera 11 aufgenommenen Bild erfolgt.

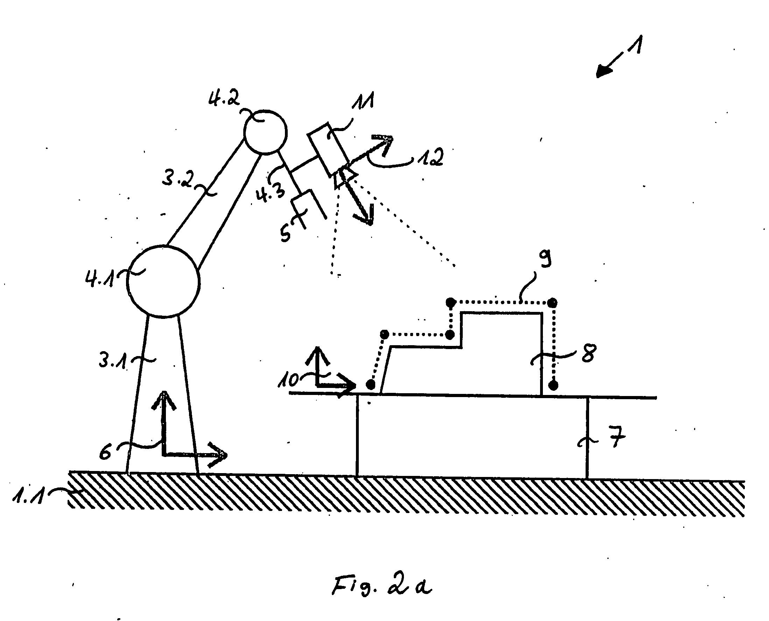

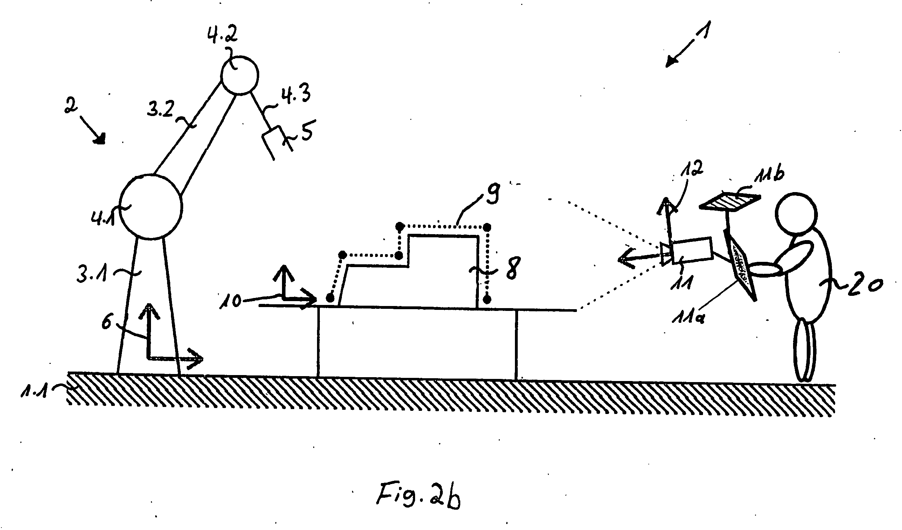

Die Fig. 2a zeigt die gleiche Szene oder Umgebung, wobei gleiche Teile mit gleichen Bezugszeichen bezeichnet sind und wo insoweit zur Beschreibung der Fig. 2 auch auf die Fig. 1 verwiesen wird. Bei der Ausführungsform der Fig. 2 ist die Kamera 11 nicht stationär, sondern am Roboter, genauer an der mechanischen Schnittstelle 4.3 oder Hand des Roboters angeordnet, so dass das Kamerakoordinatensystem mit dieser beweglich ist.

Der Vorteil dieser Ausgestaltung gegenüber der in der Fig. 1 liegt darin, dass der Roboter 2 so selbst die für die AR-Visualisierung benötigte Pose der Kamera 11 im Raum und in Bezug zum Roboterkoordinatensystem 6 mitliefert, wobei hinsichtlich der genannten Relation auf die Patentanmeldung DE 103 45 743.7 verwiesen wird. Auf diese Weise ist ohne externes Tracking und ohne Modellbildung eine sehr einfach zu realisierende, glaubwürdige AR-Visualisierung möglich.

Bei der Ausgestaltung der Fig. 2b steht die Kamera 11 in fester Relation zu einem Benutzer, ist fest mit diesem verbunden. Dieser weist ein Sichtgerät 11a in Form eines Bildschirmes auf, auf dem die Umgebung und die AR-Objekte eingeblendet sind. Weiterhin ist eine Tracking-Hilfe 11b vorgesehen, mittels derer die wechselnde Position des Benutzers relativ zur restlichen Umgebung und insbesondere dem Roboter jeweils bestimmt werden kann.

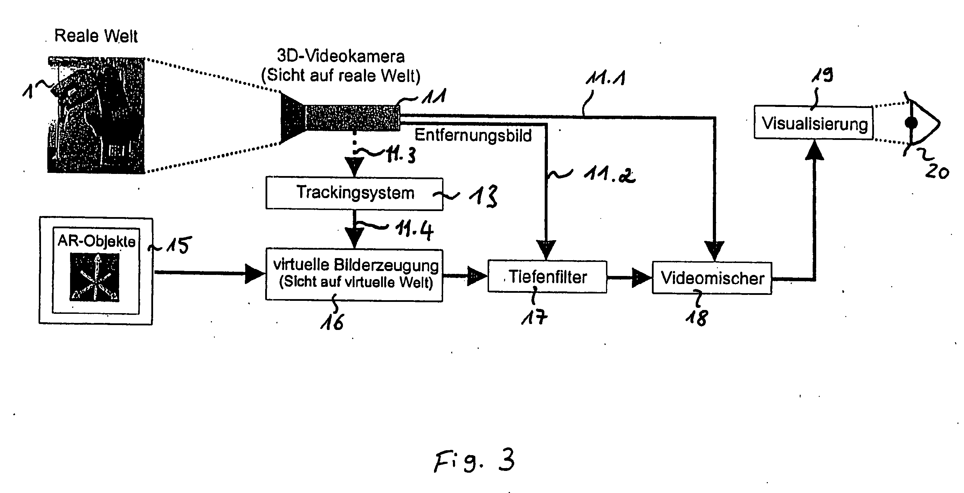

Die Fig. 3 zeigt in schematischer Darstellung eine bevorzugte Ausgestaltung einer Vorrichtung zur AR-Visualisierung als VST-AR-System.

Die Vorrichtung weist eine 3D-Videokamera 11 - bestehend aus einer herkömmlichen visuellen Videokamera und einer Tiefenbildkamera - auf, die sowohl ein Videobild 11.1 als auch ein Entfernungsbild 11.2 und gegebenenfalls Tracking-Informationen 11.4 liefert. Ein Tracking-System 13 ist als ein System zum Ermitteln und Verfolgen von Position und Rotation der 3D-Videokamera vorgesehen, das gegebenenfalls mit den von der Kamera 11 aufgenommenen Bildinformationen (einschließlich insbesondere des Tiefenbildes) arbeiten kann.

Die Kamera 11 nimmt ein Bild der realen Welt, der in ihrem Blickfeld liegenden Umgebung 1 auf, beispielsweise des Roboters 2 der Fig. 1.

Die erfindungsgemäße Vorrichtung weist weiterhin einen Vorrat - in Speichern bzw. auf eigenen Speichermedien - von AR-Objekten 15 auf. Es ist weiterhin eine Bearbeitungseinrichtung 16 zum Bearbeiten zumindest eines in das Umgebungsbild zu platzierenden AR-Objekts derart vorgesehen, wie das Objekt vom Blickpunkt aus an einem vorgesehenen Ort im Umgebungsbild 14 erscheint, mittels derer also eine virtuelle Bilderzeugung als Sicht auf die virtuelle Welt (das AR-Objekt) bewirkt wird. Dem schließt sich ein Tiefenfilter 17, ein Videomischer 18 und eine Wiedergabeeinrichtung 19 in Form eines Bildschirms an, auf dem der Betrachter 20 das überlagerte Umgebungsbild und AR-Objekt betrachten kann.

Zunächst werden gleichzeitig ein Videobild und ein Tiefenbild aufgenommen. Weiterhin werden die AR-Objekte 15 in der Einrichtung 16 derart bearbeitet, dass sie größen- und lagerichtig erscheinen. Jedes derart bearbeitete AR-Objekt wird ebenso wie das Tiefenbild 11.3 dem Tiefenbildfilter 17 als eine mögliche Ausprägung einer Bearbeitungseinrichtung zum Bearbeiten der Punkte des AR-Objekts zugeführt, wobei die oben genannten (und im Folgenden noch näher erläuterten) Bearbeitungsoperationen am AR-Objekt vorgenommen werden können, wie Ausblenden von Bereichen, gestrichelter Darstellung oder dergleichen. Jedes derart weiterbearbeitete AR-Objekt 15 wird ebenso wie das Videobild 11.1 dem Videomischer 18 als Einblendeinrichtung zum Einblenden der AR-Objekte in das Umgebungsbild zugeführt und das derart gemischte Bild dem Monitor oder dem Bildschirm 19 zugeführt, so dass der Betrachter dieses AR-Bild mit einer Überlagerung der realen Umgebung und mindestens einem AR-Objekt betrachten kann.

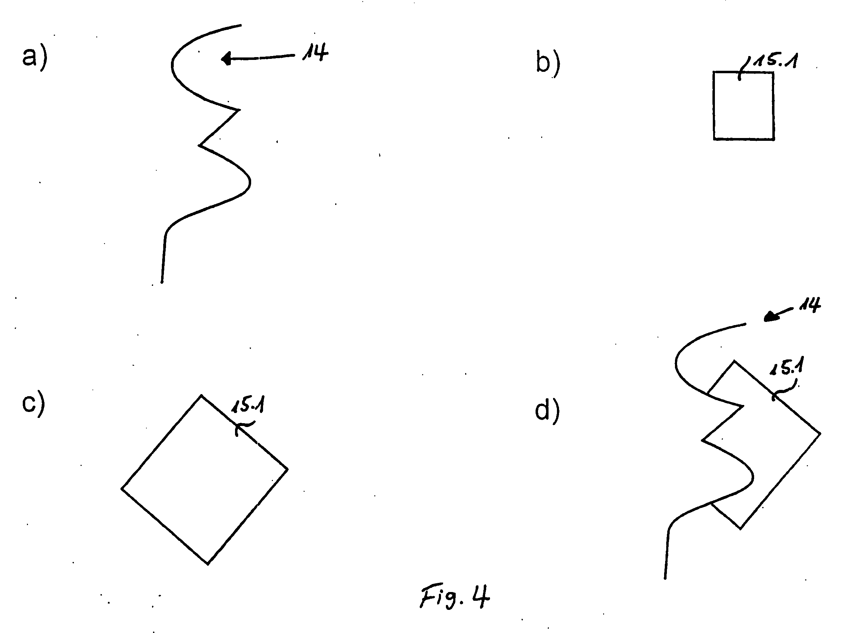

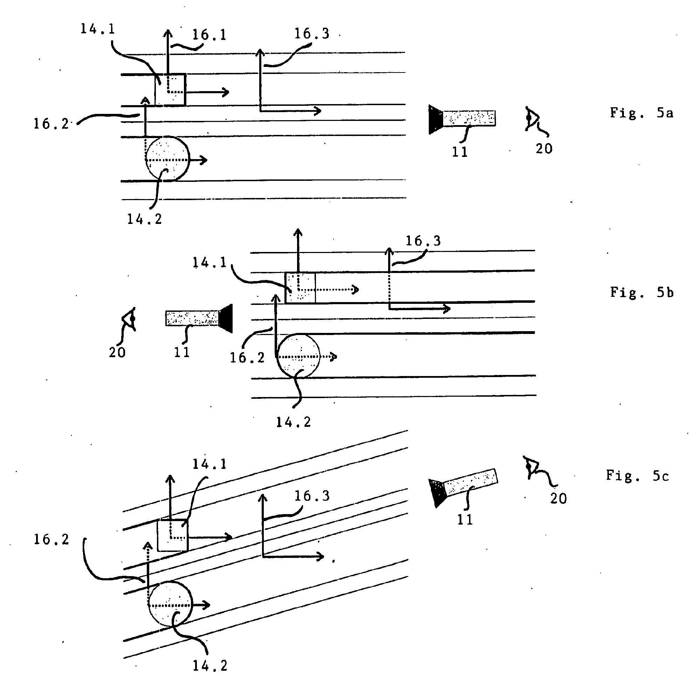

Die Bearbeitung und Einfügung des AR-Objekts in das Umgebungsbild werden anhand der Fig. 4a bis d und 5a bis 5 c im Einzelnen dargestellt.

In der Fig. 4a ist eine Schnittlinie durch eine von einer Hüllfläche eingefassten Punktewolke in einem Tiefenbild der Umgebung schematisch dargestellt (reales Objekt 14). Fig. 4b zeigt in schematischer Weise ein AR-Objekt 15.1 als solches in Form eines Quadrats. In der Fig. 4c ist gezeigt, wie das AR-Objekt der Fig. 4b zur Einfügung in das Umgebungsbild der Fig. 4a im Hinblick auf seine Größe und seine Ausrichtung (Lage) verändert wird, also hier konkret vergrößert und gedreht wird. Fig. 4d zeigt dann die Überlagerung von Umgebungsbild des realen Objektes und von AR-Objekt, wobei Teile des AR-Objekts in Blickrichtung - Draufsicht auf die Blattebene -, die hinter dem realen Objekt 14 liegen ausgeblendet und nicht dargestellt werden, d.h. für den Betrachter nicht sichtbar sind, wie dies in der Fig. 4d ersichtlich ist; das AR-Objekt scheint hinter dem realen Objekt 14 zu liegen.

In den Fig. 5a bis 5c ist dies anhand von zwei einfachen realen Objekten 14.1 und 14.2 in Form eines Quadrats und eines Kreises sowie von Koordinatensystemen 16.1, 16.2, 16.3 als AR-Objekt 16 dargestellt. Das Koordinatensystem 16.1 liegt im Mittelpunkt des Objekts 14.1 und im Überlappungsbereich beider wird das Koordinatensystem 16.1 dem Betrachter gestrichelt dargestellt. Weiterhin liegt das Koordinatensystem 16.2 in der Fig. 5a beispielhaft auf dem äußersten linken Punkt des kreisförmigen Objekts 14.2. Es wird ebenfalls die horizontale Achse im Bereich der Überlappung mit dem Objekt 14.2 gestrichelt dargestellt, ebenso wie derjenige Bereich der vertikalen Achse, der aus der Blickrichtung der Kamera 11 hinter dem Objekt 14.2 liegt sowie auch die in Blickrichtung hinteren Objekt 16.1 liegende Spitze der vertikalen Achse des Koordinatensystems 16.2.

Ein AR-Objekt in Form des vor beiden Objekten liegenden Koordinatensystems 16.3 wird bei dieser Blickrichtung voll und unverändert dargestellt.

Die Fig. 5b zeigt eine Betrachtung der Objekte 14.1, 14.2 aus der gegenüber der Fig. 5a entgegengesetzten Blickrichtung. Hier wird vom AR-Objekt 16.1 die vertikale Achse im Überlappungsbereich mit dem Objekt 14.1 gestrichelt dargestellt und die aus der Blickrichtung der Kamera 11 innerhalb bzw. hinter dem Objekt liegende horizontale Achse wird insgesamt gestrichelt dargestellt. Das hinter dem Objekt 14.1 liegende Koordinatensystem 16.3 wird in dem Bereich, in dem es aus der Blickrichtung der Kamera 11 der Fig. 5b nicht sichtbar ist, also in einem Teilbereich der vertikalen Achse gestrichelt dargestellt. Beim Koordinatensystem 16.2 ist aufgrund der Lage des Ursprungs die vertikale Achse vollständig sichtbar, während die horizontale Achse gestrichelt dargestellt ist.

Bei der Ausgestaltung der Fig. 5c zeigt eine Abwandlung der Fig. 5a mit einem endlichen Winkel zur horizontalen Achse der Koordinatensysteme. Die Objekte 16.1 und 16.2 sind in gleicher Weise sichtbar, wie bei dem Beispiel der Fig. 5a. Entsprechendes gilt für die horizontale Achse des Objekts 16.2, während aufgrund des unterschiedlichen Blickwinkels die vertikale Achse durch das Objekt 14.2 lediglich einen verkürzten Bereich abgedeckt und demgemäß gestrichelt dargestellt wird, in ihrem oberen Bereich aber weitergehend vom Objekt 14.1 abgedeckt wird und daher eine größere Länge gestrichelt dargestellt wird.

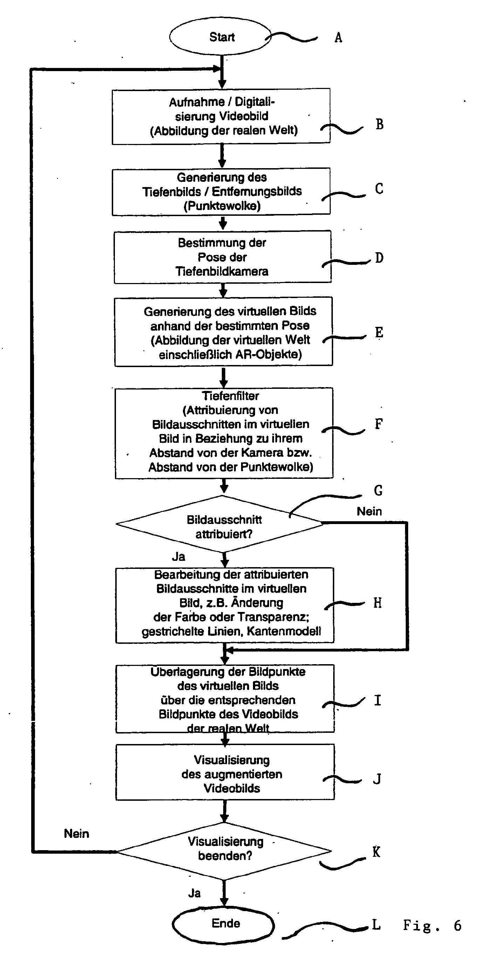

Fig. 6 zeigt ein mögliches Ablaufdiagramm für das erfindungsgemäße Verfahren bei einer VST-Visualisierung. Die im Diagramm und nachfolgend als sequentiell ablaufenden dargestellten Schritte können teilweise auch parallelisiert, d.h. gleichzeitig ablaufen.

Nach dem Start A erfolgt die Aufnahme und Digitalisierung der Videoaufnahmen als Abbildung der realen Welt im Schritt B. Im Schritt C, der parallel zum Schritt B ablaufen kann, erfolgt die Generierung eines Tiefenbildes (auch Entfernungsbild oder Punktewolke genannt) im Rahmen der Aufnahme durch die Tiefenbildkamera. In einem weiteren Schritt D erfolgt gegebenenfalls eine Bestimmung der Pose (Position und Orientierung) der Tiefenbildkamera. Schritt D kann gegebenenfalls auch parallel zu den Schritten B und C erfolgen, falls die Tracking-Informationen von einem externen Sensorsystem geliefert werden. Anschließend wird im Schritt E ein ins Umgebungsbild zu platzierendes AR-Objekt dahingehend bearbeitet, wie es vom Blickpunkt der Kamera aus an einem vorgesehenen Ort im Umgebungsbild erscheint; es erfolgt also die Generierung des AR-Bildes anhand der im vorstehenden Schritt bestimmten Pose, also einer Abbildung der virtuellen Welt. Wenn dies geschehen ist, werden in einem weiteren Schritt zumindest die Punkte des AR-Objekts, die vom Blickpunkt aus hinter einem jeweils zugehörigen Bildpunkt des Tiefenbildes der realen Umwelt liegen, in einer vorgegebenen Weise bearbeitet, indem beispielsweise Bildausschnitte im AR-Bild, die aus Sicht der Tiefenbildkamera hinter der generierten Punktwolke (des realen Umweltbildes liegen) attribuiert werden (Schritt F). Bildausschnitte bzw. Bildpunkte werden durch den Tiefenfilter mit Attributen versehen. Die Attribute stehen typischerweise in Relation zu dem Abstand von Bildausschnitten bzw. -punkten von der Kamera bzw. des Tiefenprofils. In dem Falle, dass solche Bildausschnitte attribuiert sind (Entscheidungsschritt G), erfolgt eine Bearbeitung der gekennzeichneten Bildausschnitte im AR-Bild, beispielsweise durch Änderung der Farbe, der Transparenz, Strichelung, Ausblenden oder dergleichen (Schritt H). Die Schritte G und H werden für alle Punkte eines Bildes durchlaufen, d.h. bei jedem Bildausschnitt/Pixel wird geprüft, ob es durch den Tiefenfilter ein Attribut bekommen hat. Wenn ja, wird das Pixel gemäß dem Attribut (Farbe, Transparenz u.s.w.) geändert; wenn nein, wird mit dem nächsten Bildausschnitt/Pixel fortgefahren.

In einem weiteren Schritt (Schritt I) erfolgt dann die Überlagung der Bildpunkte des AR-Bildes über die entsprechenden Bildpunkte des Videobildes der realen Welt und schließlich im Schritt J eine Visualisierung des augmentierten Videobildes. Soweit dieser Vorgang mit dem nächsten von der Videokamera erzeugten Videobild geschehen soll, erfolgt ein Rücksprung zum Schritt B (Entscheidungsschritt K) und die Bearbeitung des nächsten Bildes in der beschriebenen Weise, andernfalls eine Beendigung des Verfahrensablaufes (Schritt L).

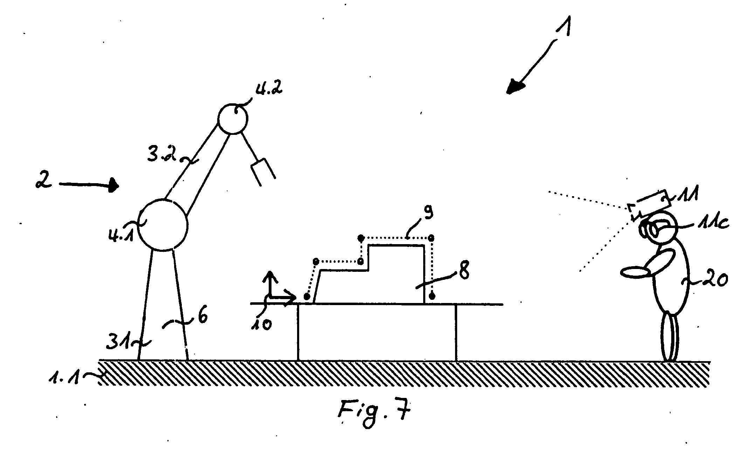

Bei der OST-Visualisierung entfallen im Wesentlichen die nicht notwendigen Schritte B und I, während ansonsten der Ablauf weitgehend der gleiche ist, wobei der Schritt J eine Visualisierung der AR-Objekte durch ein Einblenden des virtuellen Bildes in das Gesichtsfeld des Betrachters vorsieht, wie letzteres in Fig. 7 veranschaulicht ist.

Die Fig. 7 bis 9 erläutern den Erfindungsgegenstand für ein OST-Augmented-Reality-System. Gleiche Teile sind wieder mit gleichen Bezugszeichen versehen. Soweit sich gegenüber der Ausgestaltung insbesondere der Fig. 1-3, 6 keine Änderungen ergeben, wird zur Vermeidung von Wiederholungen auf die dortigen Ausführungen verwiesen.

Bei der Ausgestaltung der Fig. 7 steht die Kamera 11 in fester Relation zu einem Benutzer, ist fest mit diesem verbunden. Dieser weist ein Retinaldisplay 11c auf, mittels dessen das AR-Bild auf die Netzhaut des Betrachters projiziert wird und dies so in die vom Betrachter gesehene reale Umgebung eingeblendet wird.

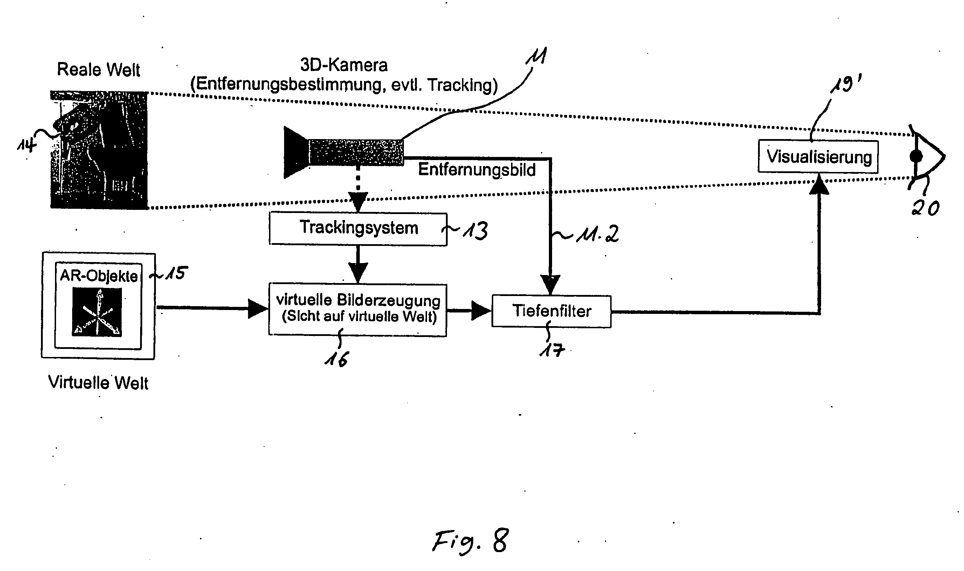

Die Fig. 8 zeigt wieder eine Szene der realen Welt (Umgebung), die von einer Kamera 11 erfasst wird, die nun eine reine Tiefenbildkamera sein kann. Das vorhandene AR-Objekt 15 wird in gleicher Weise unter Zuhilfenahme eines zur fortlaufenden Ermittlung der Pose verwendeten Tracking-Systems 13 an das erfasste Tiefenbild 11.3 angepasst und dann auf dem teiltransparenten Bildschirm 19' als Sichtgerät in das Blickfeld des Betrachters 20, der lediglich durch den transparenten Bildschirm direkt die Szene 14 sieht, eingeblendet, so dass das angepasste AR-Objekt an der richtigen Stelle und in richtiger Darstellung in dem vom Betrachter gesehenen Umgebungsbild erscheint.

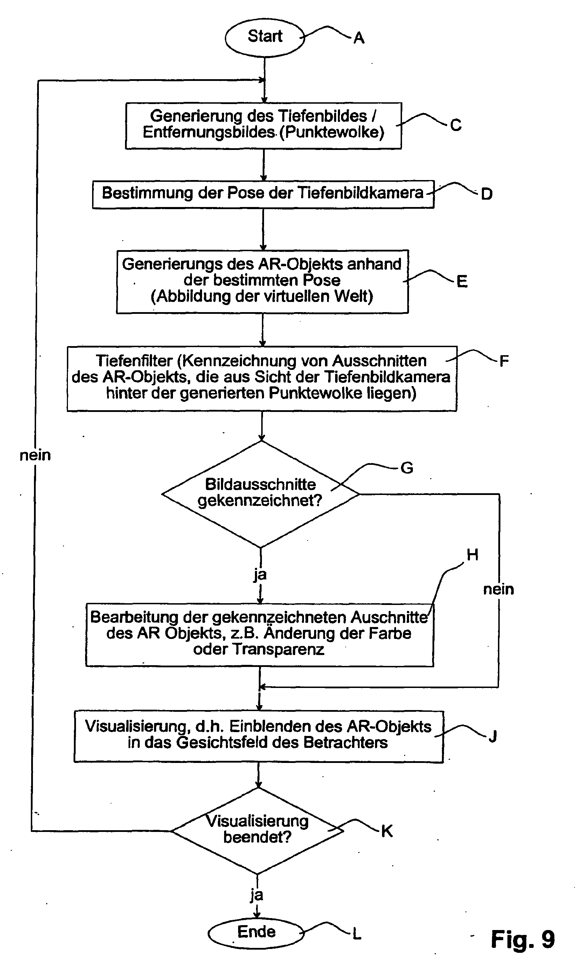

Auch der in der Fig. 9 darstellte Verfahrensablauf entspricht grundsätzlich dem für die VST-Visualisierung bis auf die durch die OST-Betrachtung gegebenen Änderungen, so dass auch insofern grundsätzlich auf die Erläuterungen der Fig. 6 verwiesen werden kann.

Der Schritt B des VST-Verfahrensablaufs der Aufnahme und Digitalisierung eines Videobildes ist nicht erforderlich, da, wie gesagt, bei der OST-Visualisierung der Betrachter die Szene oder Umgebung direkt oder durch einen transparenten Bildschirm betrachtet und nicht über einen Bildmonitor. Entsprechend entfällt auch der Schritt I der Überlagerung der Bildpunkte des virtuellen Bildes über die entsprechenden Bildpunktes des Videobildes der realen Welt. Es erfolgt lediglich eine Visualisierung, d.h. ein Einblenden des AR-Bildes in das Gesichtsfeld des Betrachters (Schritt J). Ansonsten entsprechen die Verfahrensschritte dem der Fig. 6 für die VST-Visualisierung.

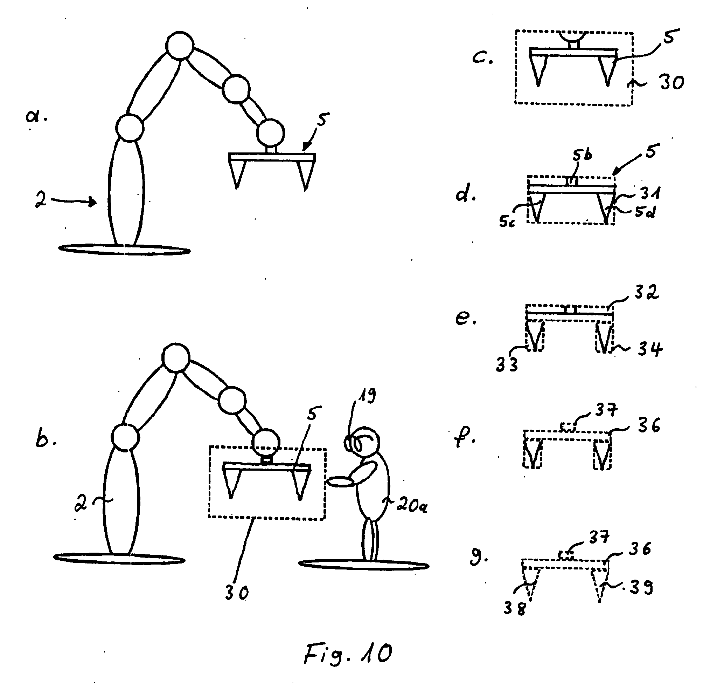

Das erfindungsgemäße Verfahren sowie die erfindungsgemäße Vorrichtung kann in vorteilhafter Weise zur Modellierung eines realen Objekts als virtuelles oder AR-Objekt eingesetzt werden, wie dies im Folgenden unter Bezug auf die Figuren 10a bis g erläutert wird:

Ein Roboterwerkzeug, wie eine Schweißzange oder im Folgenden ein Greifer, werden vor Ort mit Hilfe von kleinen Elementargeometrien, wie Würfeln, Kugeln u.s.w., modelliert, indem die Elementargeometrien nach und nach von einer Person in der erweiterten Realität positioniert werden. Die Fig. 10a zeigt zunächst einen Roboter 2 mit einem (realen) Greifer 5. In der Fig. 10b ist zusätzlich eine Person 20a dargestellt, die eine Brille trägt, in der AR-Objekte eingeblendet sind. Über ein hier nicht dargestelltes Bediengerät kreiert die Person 20a nun ein AR-Objekt in Form eines quaderförmigen Rahmens 30 um den Greifer 5 - hier nur zweidimensional als rechteckiger gestrichelter Rahmen dargestellt. Die weitere Modellierung, die der Bediener 20a vornimmt, um ein virtuelles oder AR-Objekt zu schaffen, das an den tatsächlichen realen Greifer 5 möglichst genau angepasst ist, ist in den Fig. 10c bis 10g dargestellt, wobei die Fig. 10c noch einmal den Quader 30 um den realen Greifer 5 zeigt. Der Rahmen 30 wird zunächst zu einem Quader 31 verkleinert, der das reale Objekt - den Greifer 5 an seinen Grenzen umhüllt. Anschließend erfolgt eine weitere Annäherung dadurch, dass kleinere Quader gebildet werden, die einerseits die Traverse 5a und die Anschlussplatte 5b und andererseits jeweils einen Greiferarm 5c, 5d umgeben (Fig. 10e). Sodann wird Quader 32 aufgespalten in einen die Traverse nachbildenden Quader 36 sowie einen die Anschlussplatte nachbildenden Quader 37 (Fig. 10f). Schließlich können die spitz zulaufenden Greiferarme 5c, 5d durch entsprechende geometrische Figuren 38, 39 nachgebildet werden. Das so gebildete AR-Objekt wird sodann abgelegt (gespeichert) und kann zur Visualisierung, Kollisionsvermeidung, Simulation und ähnlichem bei späteren Anwendungen eingesetzt werden.

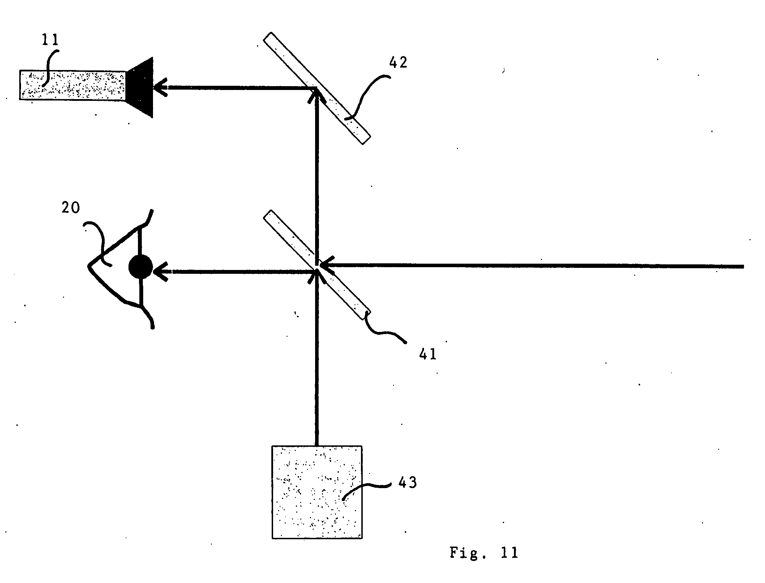

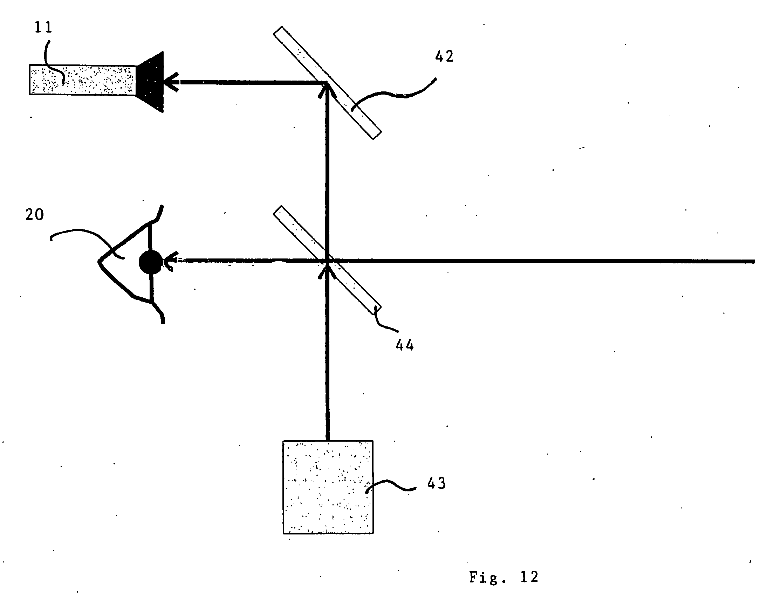

Die Fig. 11 und 12 zeigen beispielhafte (idealisierte) VST- und OST-Visualisierungsvorrichtungen. Beide Vorrichtungen könnten als "AR-Brille" bezeichnet werden. Idealerweise stimmen dabei Blickpunkt des menschlichen Betrachters und Blickpunkt der 3D-Kamera überein (hier durch Spiegel realisiert). Bei der Fig. 11 ist im Blickfeld des Betrachters 20 in Doppelzeichnung ein Spiegel 41 angeordnet, mittels dessen einerseits - und über einen weiteren Spiegel 42 - das Umgebungsbild auf die Kamera 11 gelenkt wird und auf der anderen Seite das gesamte Bild - reales und AR-Bild - vor einen Projektor projiziert wird und so vom Betrachter 20 gesehen werden kann.

Bei der Ausgestaltung der Fig. 12 ist im Blickfeld des Betrachters 20 ein halbdurchlässiger Spiegel 44 angeordnet über den - und wiederum über einen Spiegel 42 - das Umgebungsbild auf eine Tiefenbildkamera 11 gerichtet wird und durch den der Betrachter 20 die Umgebung betrachten kann. Weiterhin wird durch den Spiegel 44 das AR-Bild des Projektors 43 in das Blickfeld des Betrachters 20 gelenkt und so mit der für ihn gesehenen (realen) Umgebung überlagert.

### Bezugszeichenliste

- 1: Roboter-Bearbeitungs-Zelle
- 1.1: Basismontagefläche
- 1: Umgebung
- 2: Roboter
- 3.1, 3.2: Glied
- 4.1: Gelenk
- 4.2: Gelenk
- 4.3: Schnittstelle
- 5: Greifer
- 5a: Traverse
- 5b: Anschlussplatte
- 5c, 5d: Greiferarm
- 6: Roboterkoordinatensystem
- 7: Werkstücktisch
- 8: Werkstück
- 9: Roboterbahn
- 10: Koordinatensystem
- 11: Kamera
- 11a: Sichtgerät
- 11b: Tracking-Hilfe
- 11c: Retinaldisplay
- 11.1: Videobild
- 11.2: Entfernungsbild
- 11.3: Tiefenbild
- 11.4: Tracking-Informationen
- 12: Kamerakoordinatensystem
- 13: Tracking-System
- 14, 14.1, 14.2: Objekt
- 15: AR-Objekte
- 15.1: AR-Objekt
- 16: Bearbeitungseinrichtung
- 16.1, 16.2, 16.3: Koordinatensystem als AR-Objekt
- 17: Tiefenbildfilter
- 18: Videomischer
- 19: Wiedergabeeinrichtung
- 19': Bildschirm, AR-Brille
- 20: Betrachter
- 20a: Person
- 30: Rahmen
- 31-34: Quader
- 36, 37: Quader
- 38, 39: geometrische Figuren
- 41, 42, 44: Spiegel
- 43: Projektor

## Patentansprüche

1. Verfahren zur Bestimmung von optischen Überdeckungen eines virtuellen Bildes eines virtuellen Objektes und eines Realbildes einer realen Umgebung, mit optischem Erfassen von Bildpunkten des Realbildes aus einer Betrachtungspose mittel einer Kamera, die an einem Roboter (2) angeordnet und mit diesem beweglich ist, Bestimmen von ersten Tiefenlagen für die Bildpunkte des Realbildes bezogen auf die Betrachtungspose, Erzeugen von Bildpunkten aus einem auf Grundlage der Pose des virtuellen Objekts und der Betrachtungspose erstellten virtuellen Bildes des virtuellen Objekts, Berechnen von zweiten Tiefenlagen für die Bildpunkte des virtuellen Bildes bezogen auf die Betrachtungspose und Vergleichen der ersten Tiefenlagen mit den zweiten Tiefenlagen auf derselben optischen Achse der Betrachtungspose, wobei die Kamera (11) sowohl ein herkömmliches visuelles, aus den Bildpunkten des Realbildes bestehendes Videobild als auch ein Tiefenbild aus den ersten Tiefenlagen für die Bildpunkte des Realbildes der dargestellten Umgebung (1) aufnimmt und aus der Bestimmung einer räumlichen Beziehung zwischen einem Roboter-Koordinatensystem (6) des Roboters (2) und einem Kamerakoordinatensystem (12) eine Transformation für eine Augmented Reality-Visualisierung des virtuellen Objektes im von der Kamera (11) aufgenommenen Bild erfolgt, wobei der Roboter (2) selbst die für die Augmented Reality-Visualisierung benötigte Betrachtungspose der Kamera (11) im Raum und in Bezug zum Roboter-Koordinatensystem (6) mitliefert.

2. Verfahren nach Anspruch 1, **dadurch gekennzeichnet, dass** die Kamera (11) an einer mechanischen Schnittstelle (4.3) oder einer Hand des Roboters (2) angeordnet und mit diesem beweglich ist.

3. Verfahren nach Anspruch 1 oder 2, **gekennzeichnet durch** optisches Einblenden in die bildliche Darstellung der realen Umgebung derjenigen Bildpunkte des virtuellen Bildes, deren Tiefenlagen kleiner sind als diejenigen der Bildpunkte des Realbildes als eine Vordergrunddarstellung.

4. Verfahren nach einem der Ansprüche 1 bis 3, **gekennzeichnet durch** optisches Ausblenden oder Einblenden in einer gegenüber der Vordergrunddarstellung optisch geänderten Darstellung, in die bildliche Darstellung der realen Umgebung derjenigen Bildpunkte des virtuellen Bildes, deren Tiefenlagen größer sind als diejenigen der Bildpunkte des Realbildes als eine Hintergrunddarstellung.

5. Verfahren nach einem der vorangehenden Ansprüche, **dadurch gekennzeichnet, dass** die Tiefenlagen für die Bildpunkte des Realbildes mittels optischer Sensoren, insbesondere durch eine RGBD-Kamera erfasst werden, vorzugsweise simultan mit der Bilderfassung.

6. Verfahren zum Einblenden von Augmented Reality-Objekten in ein eine Umgebung zeigendes Umgebungsbild, bei dem optische Überdeckungen eines virtuellen Bildes eines virtuellen Objektes und eines Realbildes einer realen Umgebung nach einem der Ansprüche 1 bis 5 bestimmt werden,
**dadurch gekennzeichnet,**
**dass** von einem Blickpunkt aus ein Tiefenbild der Umgebung aufgenommen wird,
**dass** die Darstellung eines ins Umgebungsbild zu platzierendes Augmented Reality-Objekt dahingehend geändert wird, wie es vom Blickpunkt aus an einem vorgesehenen Ort im Umgebungsbild erscheint,
**dass** für die dem Blickpunkt zugewandten Teile des Augmented Reality-Objekts bestimmt wird, wie diese Teile vom Blickpunkt aus gesehen relativ zu einem zugehörigen Bildpunkt des Tiefenbildes liegen, also die Tiefenlagen der Bildpunkte des Realbildes der Umgebung mit den Tiefenlagen der Bildpunkte des erzeugten Augmented Reality-Objekts verglichen werden,
**dass** zumindest die Darstellung von Teilen des Augmented Reality-Objekts in Relation zu ihrer scheinbaren Tiefe oder Tiefenlage im Bild in einer Weise derart verändert wird, dass Bildbereiche des Augmented Reality-Objekts, die im Vordergrund liegen, optisch anders dargestellt werden als Bildbereiche des Augmented Reality-Objekts, die im Hintergrund liegen, und dass das so bearbeitete Augmented Reality-Objekt in das Umgebungsbild eingeblendet wird.

7. Verfahren nach einem der Ansprüche 1 bis 6, **dadurch gekennzeichnet, dass** die Teile des Augmented Reality-Objekts, die vom Blickpunkt aus hinter einem jeweils zugehörigen Bildausschnitt des Tiefenbildes liegen, im Umgebungsbild als Kantenmodell gestrichelt, strichpunktiert und/oder in ihrer Transparenz oder Farbe geändert dargestellt werden.

8. Verfahren nach einem der vorangehenden Ansprüche, **dadurch gekennzeichnet, dass** das Umgebungsbild als Videobild wiedergegeben und das Augmented Reality-Objekt in das Videobild eingeblendet wird.

9. Verfahren nach einem der Ansprüche 1 bis 8, **dadurch gekennzeichnet, dass** das Umgebungsbild durch einen transparenten Schirm unmittelbar betrachtbar ist und das Augmented Reality-Objekt im transparenten Schirm in das durch diesen betrachtete Umgebungsbild eingeblendet wird.

10. Verfahren nach einem der vorangehenden Ansprüche, **dadurch gekennzeichnet, dass** die Augmented Reality-Objekte in einen fortlaufenden Videodatenstrom in Echtzeit oder als Einzelbilder bzw. Standbilder eingeblendet werden.

11. Vorrichtung zur Bestimmung von optischen Überdeckungen eines virtuellen Bildes eines virtuellen Objektes und eines Realbildes einer realen Umgebung, zur Durchführung eines Verfahrens nach einem der Ansprüche 1 bis 10, **gekennzeichnet durch** eine Aufnahmeeinrichtung (11) zum optischen Erfassen von Bildpunkten des Realbildes aus einer Betrachtungspose, einer Bestimmungseinrichtung (11) zum Bestimmen von ersten Tiefenlagen für die Bildpunkte des Realbildes bezogen auf die Betrachtungspose, einer Erzeugungseinrichtung (11) zum Erzeugen von Bildpunkten aus einem auf Grundlage der Pose des virtuellen Objekts und der Betrachtungspose erstellten virtuellen Bildes des virtuellen Objekts, eine Berechnungseinrichtung (16) zum Berechnen von zweiten Tiefenlagen für die Bildpunkte des virtuellen Bildes bezogen auf die Betrachtungspose, und eine Vergleichseinrichtung (17) zum Vergleichen der ersten Tiefenlagen mit den zweiten Tiefenlagen auf derselben optischen Achse der Betrachtungspose.

12. Vorrichtung nach Anspruch 11, **gekennzeichnet durch** eine Einblendeinrichtung (18) zum optischen Einblenden in die bildliche Darstellung der realen Umgebung derjenigen Bildpunkte des virtuellen Bildes, deren Tiefenlagen kleiner sind als diejenigen der Bildpunkte des Realbildes als eine Vordergrunddarstellung.

13. Vorrichtung nach Anspruch 11 oder 12, **gekennzeichnet durch** eine Mischeinrichtung (18) zum optischen Ausblenden oder Einblenden in einer gegenüber der Vordergrunddarstellung optisch geänderten Darstellung, in die bildliche Darstellung der realen Umgebung derjenigen Bildpunkte des virtuellen Bildes, deren Tiefenlagen größer sind als diejenigen der Bildpunkte des Realbildes als eine Hintergrunddarstellung.

14. Vorrichtung nach einem der Ansprüche 11 bis 13, **dadurch gekennzeichnet, dass** die Tiefenlagen für die Bildpunkte des Realbildes mittels optischer Sensoren, insbesondere durch eine RGBD-Kamera erfasst werden, vorzugsweise simultan mit der Bilderfassung.

15. Vorrichtung zum Einblenden von Augmented Reality-Objekten in ein eine Umgebung zeigendes Umgebungsbild, bei dem optische Überdeckungen eines virtuellen Bildes eines virtuellen Objektes und eines Realbildes einer realen Umgebung mit einer Vorrichtung nach einem der Ansprüche 11 bis 14 bestimmt wird,
**gekennzeichnet durch**
eine Aufnahmeeinrichtung zum Aufnehmen eines Tiefenbildes der Umgebung von einem Blickpunkt aus, eine Darstellungseinrichtung zum Darstellen eines ins Umgebungsbild zu platzierenden Augmented Reality-Objekts derart, wie es vom Blickpunkt aus an einem vorgesehenen Ort im Umgebungsbild erscheint, eine Bestimmungseinrichtung zum Bestimmen der für den Blickpunkt zugewandten Teile des Augmented Reality-Objekts derart, wie diese Teile vom Blickpunkt aus gesehen relativ zu einem zugehörigen Bildausschnitt des Tiefenbildes liegen, also zum Vergleichen der Tiefenlagen der Bildpunkte des Realbildes der Umgebung mit den Tiefenlagen der Bildpunkte des erzeugten Augmented Reality-Objekts,
eine zweite Darstellungseinrichtung zum Darstellen der Teile des Augmented Reality-Objekts, die vom Blickpunkt aus hinter einem jeweils zugehörigen Bildausschnitt des Tiefenbildes liegen, in einer Weise derart verändert wird, dass Bildbereiche des Augmented Reality-Objekts, die im Vordergrund liegen, optisch anders dargestellt werden als Bildbereiche des Augmented Reality-Objekts, die im Hintergrund liegen, und einer Einblendeinrichtung zum Einblenden des Augmented Reality-Objekts in das Umgebungsbild.

## Claims

1. Method for determining optical overlaps of a virtual image of a virtual object and a real image of a real environment, by optically determining image points of the real image from an observation pose by means of a camera which is arranged on a robot (2) and can be moved by the latter,
determining first depth positions for the image points of the real image with reference to the observation pose, generating image points from a virtual image of the virtual object based on the pose of the virtual object and the observation pose, calculating second depth positions for the image points of the virtual image with reference to the observation pose and comparing the first depth positions with the second depth positions on the same optical axis of the observation pose, wherein the camera (11) records both a conventional visual video image consisting of the image points of the real image and a depth image from the first depth positions for the image points of the real image of the shown environment (1) and from the determination of a spatial relationship between a robot coordinate system (6) of the robot (2) and a camera coordinate system (12) a transformation takes place for an augmented reality visualisation of the virtual object in the image taken by the camera (11), wherein the robot (2) itself supplies the observation pose of the camera (11) required for the augmented reality visualisation in space and in relation to the robot coordinate system (6).

2. Method according to claim 1, **characterised in that** the camera (11) is arranged on a mechanical interface (4.3) or a hand of the robot (2) and can be moved by the latter.

3. Method according to claim 1 or 2, **characterised by** optically inserting into the image representation of the real environment the image points of the virtual image, whose depth positions are smaller than those of the image points of the real image than a foreground representation.

4. Method according to one of claims 1 to 3, **characterised by** optically hiding or inserting in a representation, which is optically different from the foreground representation, in the image representation of the real environment the image points of the virtual image whose depth positions are larger than those of the image points of the real image than a background representation.

5. Method according to one of the preceding claims, **characterised in that** the depth positions for the image points of the real image are determined by means of optical sensors, in particular by an RGBD camera, preferably at the same time as the image detection.

6. Method for inserting augmented reality objects into an environment image showing an environment, in which optical overlaps of a virtual image of a virtual object and a real image of a real environment are determined according to one of claims 1 to 5, **characterised in that** from one point of view a depth image of the environment is taken, **in that** the representation of an augmented reality object to be placed into the environment image is changed, as it appears from the point of view at a given location in the environment image, **in that** for the parts of the augmented reality object facing the point of view it is determined how said parts are positioned seen from the point of view relative to an associated image point of the depth image, i.e. the depth positions of the image points of the real image of the environment are compared with the depth positions of the image points of the produced augmented reality object, **in that** at least the representation of parts of the augmented reality object is changed in relation to their apparent depth or depth position in the image in such a way that image areas of the augmented reality object in the foreground, are represented optically differently than image areas of the augmented reality object in the background, and **in that** the thus processed augmented reality object is inserted into the environment image.

7. Method according to one of claims 1 to 6, **characterised in that** the parts of the augmented reality object that lie behind a corresponding image area of the depth image from the point of view are depicted in the environment image as an edge model by broken lines, a series of dashes and dots and/or are represented as changed in their transparency or colour.

8. Method according to one of the preceding claims, **characterised in that** the environment image is reproduced as a video image and the augmented reality object is inserted into the video image.

9. Method according to one of claims 1 to 8, **characterised in that** the environment image can be observed directly through a transparent screen and
the augmented reality object in the transparent screen is inserted into the environment image observed through the latter.

10. Method according to one of the preceding claims, **characterised in that** the augmented reality objects are inserted in a continuous video data flow in real time or as individual images or still images.

11. Device for determining the optical overlaps of a virtual image of a virtual object and a real image of a real environment for performing a method according to one of claims 1 to 10, **characterised by** a recording device (11) for optically recording image points of the real image from an observation pose,
a determination device (11) for determining first depth positions for the image points of the real image relative to the observation pose, a production device (11) for producing image points from a virtual image of the virtual object based on a pose of the virtual object and the observation pose,
a calculation device (16) for calculating second depth positions for the image points of the virtual image relative to the observation pose, and
a comparison device (17) for comparing the first depth positions with the second depth positions along the same optical axis of the observation pose.

12. Device according to claim 11, **characterised by** an inserting device (18) for optically inserting into the graphic representation of the real environment the image points of the virtual image that have depth positions that are smaller than the depth positions of the image points of the real image than a foreground representation.

13. Device according to claim 11 or 12, **characterised by** a mixing device (18) for optically hiding or inserting in a representation optically changed relative to the foreground representation into the image representation of the real environment of those image points of the virtual image whose depth positions are greater than those of the image points of the real image than a background representation.

14. Device according to one of claims 11 to 13, **characterised in that** the depth positions for the image points of the real image are determined by means of optical sensors, in particular by an RGBD camera, preferably simultaneously with the image detection.

15. Device for inserting augmented reality objects into an environment image showing an environment with a device according to one of claims 11 to 14, **characterised by** a recording device for recording a depth image of the environment from one point of view,
a representation device for representing an augmented reality object to be placed in the environment image, as it appears from the point of view at a predetermined location in the environment image,
a determination device for determining the parts of the augmented reality object that face the point of view such as how said parts as seen from the point of view are positioned relative to an associated image point of the depth image, i.e. for comparing depth positions of image points of the real image of the environment with depth positions of image points of the produced augmented reality object, a second representation device for representing parts of the augmented reality object, which lie behind a corresponding image section of the depth image as seen from the point of view, is modified such that image areas of the augmented reality object that lie in the foreground are depicted in a way that is visually different from image areas of the augmented reality object that lie in the background and an inserting device for inserting the augmented reality object into the environment image.

## Revendications

1. Procédé pour déterminer des superpositions optiques d'une image virtuelle d'un objet virtuel et d'une image réelle d'un environnement réel, comportant la saisie optique de pixels de l'image réelle depuis une pose d'observation au moyen d'une caméra qui est agencée sur un robot (2) et qui se déplace avec celui-ci, la détermination de premières positions de profondeur pour les pixels de l'image réelle par rapport à la pose d'observation, la génération de pixels à partir d'une image virtuelle de l'objet virtuel, créée sur la base de la pose de l'objet virtuel et de la pose d'observation, le calcul de deuxièmes positions de profondeur pour les pixels de l'image virtuelle par rapport à la pose d'observation, et la comparaison des premières positions de profondeur avec les deuxièmes positions de profondeur sur le même axe optique de la pose d'observation, la caméra (11) prenant tant une image vidéo visuelle classique constituée par les pixels de l'image réelle qu'une image de profondeur à partir des premières positions de profondeur pour les pixels de l'image réelle de l'environnement (1) représenté, et à partir de la détermination d'une relation spatiale entre un système de coordonnées (6) de robot du robot (2) et un système de coordonnées de caméra (12) est produite une transformation pour une visualisation avec réalité augmentée de l'objet virtuel dans l'image prise par la caméra (11), le robot (2) fournissant lui-même la pose d'observation de la caméra (11) dans l'espace et en rapport avec le système de coordonnées (6) de robot, qui est nécessaire pour la visualisation.

2. Procédé selon la revendication 1, **caractérisé en ce que** la caméra (11) est agencée au niveau d'une interface (4.3) mécanique ou d'une main du robot (2) et peut se déplacer avec celui-ci.

3. Procédé selon la revendication 1 ou 2, **caractérisé par** une incrustation optique dans la représentation par image de l'environnement réel des pixels de l'image virtuelle dont les positions de profondeur sont plus petites que celles des pixels de l'image réelle en tant que représentation d'avant plan.

4. Procédé selon l'une des revendications 1 à 3, **caractérisé par** masquage ou incrustation optique dans une représentation optiquement modifiée par rapport à la représentation d'avant-plan, dans la représentation par image de l'environnement réel des pixels de l'image virtuelle dont les positions de profondeur sont plus grandes que celles des pixels de l'image réelle en tant que représentation d'arrière-plan.

5. Procédé selon l'une des revendications précédentes, **caractérisé en ce que** les positions de profondeur pour les pixels de l'image réelle sont saisies au moyen de capteurs optiques, en particulier par une caméra RGBD, de préférence simultanément avec la saisie de l'image.

6. Procédé pour incruster des objets à réalité augmentée dans une image d'environnement montrant un environnement, dans lequel on détermine des superpositions optiques d'une image virtuelle d'un objet virtuel et d'une image réelle d'un environnement réel selon l'une des revendications 1 à 5, **caractérisé en ce qu'**à partir d'un point de vue, une image de profondeur de l'environnement est prise,
**en ce que** la représentation d'un objet à réalité augmentée placé dans l'image d'environnement est modifiée comme il apparait depuis le point de vue, à un endroit prévu dans l'image d'environnement,
**en ce que** pour les parties de l'objet à réalité augmentée qui sont tournées vers le point de vue, il est déterminé comment ces parties, vues depuis le point de vue, sont situées par rapport à un pixel associé de l'image de profondeur, c'est-à-dire comment les positions de profondeur des pixels de l'image réelle de l'environnement sont comparées avec les positions de profondeur des pixels de l'objet à réalité augmentée généré,
**en ce qu'**au moins la représentation de parties de l'objet à réalité augmentée en relation avec leur profondeur apparente ou leur position de profondeur dans l'image est modifiée de telle manière que des zones d'image de l'objet à réalité augmentée, qui se trouvent dans l'avant-plan, sont optiquement représentées autrement que des zones d'image de l'objet à réalité augmentée qui se trouvent dans l'arrière-plan, et **en ce que** l'objet à réalité augmentée ainsi traité est incrusté dans l'image d'environnement.

7. Procédé selon l'une des revendications 1 à 6, **caractérisé en ce que** les parties de l'objet à réalité augmentée qui se trouvent, à partir du point de vue, derrière un derrière un cadrage associé respectif de l'image de profondeur, sont représentées dans l'image d'environnement sous forme de parallélépipède rectangle en pointillés, en tirets et points et/ou dans de manière modifiée quant à leur transparence ou leur couleur.

8. Procédé selon l'une des revendications précédentes, **caractérisé en ce que** l'image d'environnement est reproduite sous forme d'image vidéo, et l'objet à réalité augmentée est incrusté dans l'image vidéo.

9. Procédé selon l'une des revendications 1 à 8, **caractérisé en ce que** l'image d'environnement peut être observée directement à travers un écran transparent, et l'objet à réalité augmentée est incrusté dans l'écran transparent à travers cette image d'environnement observée.

10. Procédé selon l'une des revendications précédentes, **caractérisé en ce que** l'objet à réalité augmentée est incrusté dans un flux de données vidéo continu en temps réel ou sous forme d'images individuelles ou d'images fixes.

11. Dispositif de détermination de superpositions optiques d'une image virtuelle d'un objet virtuel et d'une image réelle d'un environnement réel, pour mettre en oeuvre un procédé selon l'une des revendications 1 à 10, **caractérisé par** un dispositif de prise de vues (11) pour saisir optiquement des pixels de l'image réelle depuis une pose d'observation, par un dispositif de détermination (11) pour déterminer des premières positions de profondeur pour les pixels de l'image réelle par rapport à la pose d'observation, par un dispositif de génération (11) pour générer des pixels depuis une image virtuelle de l'objet virtuelle, réalisée sur la base de la pose de l'objet virtuel et de la pose d'observation, par un dispositif de calcul (16) pour calculer des deuxièmes positions de profondeur pour les pixels de l'image virtuelle par rapport à la pose d'observation et par un dispositif de comparaison (17) pour comparer les premières positions de profondeur avec les deuxièmes positions de profondeur sur le même axe optique de la pose d'observation.

12. Dispositif selon la revendication 11, **caractérisé par** un dispositif d'incrustation (18) pour l'incrustation optique, dans la représentation en images de l'environnement réel, des pixels de l'image virtuelle dont les positions de profondeur sont plus petites que celles des pixels de l'image réelle en tant que représentation d'avant-plan.

13. Dispositif selon la revendication 11 ou 12, **caractérisé par** un dispositif de mixage (18) pour masquer ou incruster optiquement, dans une représentation optiquement modifiée par rapport à la représentation d'avant-plan dans la représentation en images de l'environnement réel, les pixels de l'image virtuelle dont les positions de profondeur sont plus grandes que celles des pixels de l'image réelle en tant que représentation d'arrière-plan.

14. Dispositif selon l'une des revendications 11 à 13, **caractérisé en ce que** les positions de profondeur pour les pixels de l'image réelle sont saisies au moyen de capteurs optiques, en particulier par une caméra RGDB, de préférence simultanément avec la capture d'images.

15. Dispositif pour incruster des objets à réalité augmentée dans une image d'environnement montrant un environnement, dans lequel on détermine des superpositions d'une image virtuelle d'un objet virtuel et d'une image réelle d'un environnement réel, comportant un dispositif selon l'une des revendications 11 à 14,
**caractérisé par**
un dispositif de prise de vues pour photographier une image de profondeur de l'environnement à partir d'un point de vue,
un dispositif de représentation pour représenter un objet à réalité augmentée à placer dans l'image d'environnement comme il apparait, depuis le point de vue, à un endroit prévu dans l'image d'environnement,
un dispositif de détermination pour déterminer les parties de l'objet à réalité augmentée qui sont tournées vers le point de vue, comment ces parties, vues depuis le point de vue, sont situées par rapport à un cadrage associé de l'image de profondeur, c'est-à-dire pour comparer les positions de profondeur des pixels de l'image réelle de l'environnement avec les positions de profondeur des pixels de l'objet à réalité augmentée généré,
un deuxième dispositif de représentation pour représenter les parties de l'objet à réalité augmentée qui, par rapport au point de vue, sont situées derrière un cadrage associé respectif de l'image de profondeur et sont modifiées de manière à ce que des zones d'image de l'objet à réalité augmentée qui se trouvent dans l'avant-plan, sont optiquement représentées autrement que des zones d'image de l'objet à réalité augmentée qui se trouvent dans l'arrière-plan, et
un dispositif d'incrustation pour incruster l'objet à réalité augmentée dans l'image d'environnement.
